(19) Europäisches Patentamt

European Patent Office

Office européen des brevets

(11) **EP 1 191 435 B1**

(12) **EUROPÄISCHE PATENTSCHRIFT**

| | |
|---|---|
| (45) Veröffentlichungstag und Bekanntmachung des Hinweises auf die Patenterteilung:<br>**12.04.2006 Patentblatt 2006/15** | (51) Int Cl.:<br>***G06F 7/02*** *(2006.01)*     ***G06F 1/035*** *(2006.01)* |

(21) Anmeldenummer: **00120747.1**

(22) Anmeldetag: **22.09.2000**

(54) **Verfahren und Vorrichtung zum Auffinden eines Referenzmusters in einem seriellen digitalen Datenstrom**

Method and device for detecting a reference number in a serial digital datastream

Méthode et appareil à détecter un nombre de référence dans un flux sériel des données digitaux

(84) Benannte Vertragsstaaten:
**DE FR GB IT**

(43) Veröffentlichungstag der Anmeldung:
**27.03.2002 Patentblatt 2002/13**

(73) Patentinhaber: **Tektronix Berlin GmbH & Co. KG**
**13629 Berlin (DE)**

(72) Erfinder: **Villwock, Christian**
**14979 Grossbeeren (DE)**

(74) Vertreter: **Schurack, Eduard F. et al**
**Hofstetter, Schurack & Skora**
**Balanstrasse 57**
**81541 München (DE)**

(56) Entgegenhaltungen:
**EP-A- 0 483 399**      **EP-A- 0 727 886**
**US-A- 5 748 688**

• **PATENT ABSTRACTS OF JAPAN vol. 009, no. 174 (P-374), 19. Juli 1985 (1985-07-19) & JP 60 049435 A (ANDOU DENKI KK), 18. März 1985 (1985-03-18)**

**Beschreibung**

Die vorliegende Erfindung betrifft ein Verfahren zum Auffinden eines Referenzmusters in einem seriellen digitalen Datenstrom gemäß dem Oberbegriff des Patentanspruchs 1 sowie eine entsprechende Vorrichtung zum Auffinden eines Referenzmusters in einem seriellen digitalen Datenstrom.

Bei der Mustererkennung in einem kontinuierlichen binären Datenstrom mittels Software, insbesondere zum Auffinden eines Referenzmusters in einem seriellen Strom digitaler Daten, ergibt sich das Problem, dass Mikroprozessoren nur byteweise (und Vielfache davon) ausgerichtete Daten bearbeiten können. Die Daten werden in der Regel von einem Hardwarebaustein, beispielsweise einem Speicher, byteweise zur Verfügung gestellt, wobei der Hardwarebaustein den seriellen Datenstrom in byteweise ausgerichtete Segmente zusammenfasst. Da das zu suchende Referenzmuster jedoch an beliebiger Stelle in dem Datenstrom auftauchen kann, und damit nicht byteweise ausgerichtet sein muss, muss im Stand der Technik mit rechenzeitaufwendigen Operationen über mehrere Segmente hinweg gearbeitet werden. Insbesondere zu erwähnen sind hier die sich wiederholenden Operationen des Vergleichens, des bitweisen Verschiebens, des "Verundens" und des "Veroderns". Insbesondere bei der Suche nach längeren Referenzmustern gestaltet sich die Suche zeitaufwendig.

Aus der US-A-5,748,688 ist ein Bit-Muster-Detektor bekannt, der ein m-Bit-Datenwort eines eingehenden Bit-Stroms mit einem spezifizierten n-Bit-Muster (n < m) in einer linken und rechten Vergleichseinheit vergleicht. Falls das Muster unter Verwendung normaler Mustervergleichstechniken in den m-Bits nicht detektiert wird, zeigt die linke Mustervergleichseinheit keinen Treffer an. Die rechte Mustervergleichseinheit gibt einen Zählerstand aus, und zwar die Anzahl von Bits s1 von rechts nach links, die dem ersten Teil des Musters entsprechen. Dann werden die nächsten m-Bits des eingehenden Stroms mit den Mustern in der linken Vergleichseinheit verglichen und die Anzahl von Bits s2 von links nach rechts, die dem letzten Teil des Musters entsprechen, gezählt. Wenn die Summe der zwei Teiltreffer in aufeinanderfolgenden m-Bit-Worten ≥ n ist, dann wurde das Muster detektiert und die linke Trefferzahl s2 wird verwendet, um die Position der extrahierten Daten in dem eingehenden Bit-Strom festzustellen.

Aufgabe der vorliegenden Erfindung ist es deshalb, ein gattungsgemäßes Verfahren derart weiterzuentwickeln, dass ein Auffinden eines Referenzmusters in einem seriellen Datenstrom in einer kürzeren Zeitspanne ermöglicht wird.

Diese Aufgabe wird durch die Lehre von Patentanspruch 1 gelöst.

Die Erfindung basiert auf der Idee, zum Auffinden eines Referenzmusters in einem seriellen Datenstrom eine bestimmte Anzahl Bits vor einem Punkt P zwischen zwei Bits im Datenstrom und eine bestimmte Anzahl Bits nach dem Punkt P mit Hilfe vorher erstellter Vergleichstabellen auf vom Punkt P ausgehende, mit dem Referenzmuster übereinstimmende Bitfolgen zu vergleichen und die Anzahl der übereinstimmenden Bits vor dem Punkt P und nach dem Punkt P zu addieren. Ist die Summe mindestens so groß wie die Anzahl der Bits im Referenzmuster, ist das Referenzmuster gefunden.

Dadurch entfällt der zeitaufwendigste Schritt des aus dem Stand der Technik bekannten Verfahrens, nämlich die Notwendigkeit, den Auszug aus dem zu analysierenden Datenstrom zum Vergleichen mit dem Referenzmuster, womöglich über mehrere Segmente hinweg, bitweise zu verschieben. Außerdem ermöglichen die Vergleichstabellen, die in Kenntnis des Referenzmusters vorab zeitunkritisch erstellt werden können, dass die Zahl der notwendigen UND- und ODER-Verknüpfungen erheblich gesenkt werden können.

In einer vorteilhaften Ausgestaltung der Erfindung bestehen die Vergleichstabellen aus mehreren Untertabellen. Insbesondere bei Referenzmustern, die sich über eine Vielzahl von Bytes erstrecken, würden sich ohne Verwendung von Untertabellen sehr lange einzelne Einträge, korreliert mit der Länge des Referenzmusters, in den Tabellen ergeben. Um alle möglichen Kombinationen, die sich aus diesen langen Einträgen bilden lassen, für einen Vergleich zur Verfügung zu stellen, wäre nicht nur viel Speicherplatz nötig. Aufgrund der Vielzahl von Einträgen würde insbesondere der Zeitbedarf für die Vielzahl von Vergleichsoperationen negativ ins Gewicht fallen. Folgendes Beispiel soll dies kurz erläutern: Bei Aufteilung von 2 Bytes auf 2 Tabellen ergeben sich pro Tabelle 256 Einträge (0 bis 255), bei 2 Tabellen also 2 * 256 = 512 Einträge, gegen die verglichen werden muss. Führt man keine Aufspaltung in 2 Tabellen durch, so muss gegen $2^{16}$ = 65536 Einträge verglichen werden.

In einer weiteren vorteilhaften Ausgestaltung der Erfindung werden in den Tabellen alle Kombinationen, die mit den den jeweiligen Einträgen zugeordneten Bitlängen möglich sind, zusammen mit der Anzahl der mit dem Referenzmuster übereinstimmenden Bits abgelegt. Damit wird erreicht, dass beim Vergleich von Bitfolgen aus dem seriellen Datenstrom mit dem Referenzmuster nur die Übereinstimmung mit einem Tabelleneintrag zu prüfen ist. Bei Übereinstimmung mit einem Tabelleneintrag genügt es dann, die zugehörige Zahl übereinstimmender Bits aus der Tabelle auszulesen. Die zeitaufwendige Feststellung der Zahl der mit dem Referenzmuster übereinstimmenden Bits durch Vergleichsoperationen muss nicht während des Vergleichsvorgangs jeweils erneut erfolgen, vielmehr kann die Ermittlung der übereinstimmenden Bits pro Eintrag ebenfalls bereits vorab beim zeitunkritischen Erstellen der Vergleichstabellen durchgeführt werden.

In einer bevorzugten Ausführungsform werden die Kombinationen, die mit den den jeweiligen Einträgen zugeordneten Bitlängen möglich sind, softwaremäßig als analoge Zahlenwerte zusammen mit der Anzahl übereinstimmender Bits in einer Bitfolge abgelegt. Beim Vergleich von Bitfolgen aus dem Datenstrom werden diese zunächst in einen Analogwert umgewandelt, der dann zum Auslesen der Zahl der übereinstimmenden Bits in einer Bitfolge aus der Tabelle verwendet werden kann. Durch diese Maßnahme lässt sich auf sehr schnellem Wege die Anzahl übereinstimmender Bits aus der Tabelle auslesen.

In einer weiteren vorteilhaften Ausgestaltung der Erfindung sind die Kombinationen in den Tabellen, und soweit die Tabellen Untertabellen aufweisen, die Kombinationen in den Untertabellen, in der Reihenfolge absteigender Zahl von mit dem Referenzmuster übereinstimmenden Bits angeordnet. Beim Vergleich von Bitfolgen aus dem Datenstrom werden diese in dieser Reihenfolge mit den Einträgen in den Tabellen verglichen und der Vergleich wird bei der ersten Übereinstimmung abgebrochen. Es genügt also, die Bitfolge im Mittel mit halb soviel Einträgen zu vergleichen wie bei einer nicht nach der Reihenfolge übereinstimmender Bits geordneten Folge von Einträgen in der Tabelle.

In einer vorteilhaften Weiterbildung obiger Ausgestaltung ist für jede mögliche Anzahl von mit dem Referenzmuster übereinstimmenden Bits nur ein Eintrag in einer Tabelle angegeben. Die Bitfolgen aus dem Datenstrom werden mit den Einträgen in der Tabelle der Reihe nach verglichen, wobei jeweils nur die Anzahl von Bits in den Vergleich einbezogen wird, die gemäß dem Eintrag in der Tabelle mit dem Referenzmuster identisch sind, d. h. zum Beispiel bei einem Eintrag, der einer Übereinstimmung in 3 Bits entspricht, werden entsprechend nur diese 3 Bits beim Vergleich berücksichtigt. Dies resultiert in einer weiteren Reduzierung des Rechenaufwands.

Wie erwähnt, können herkömmliche Prozessoren nur eine feste Anzahl x an Bits, insbesondere 8 und Vielfache davon, dem Vergleich mit den Tabelleneinträgen zuführen. Besonders vorteilhaft ist es deshalb, wenn die Einträge in den Vergleichstabellen ein ganzzahliges Vielfaches von x sind. Vorzugsweise sind die beiden Vergleichstabellen gleich lang.

Ein großer Bereich von Daten des Datenstroms kann schnell untersucht werden, wenn die Einträge in den Vergleichstabellen genau so lang sind wie das Referenzmuster.

Ein weiterer Aspekt der vorliegenden Erfindung, der darin besteht, eine entsprechende Vorrichtung zu entwickeln, wird durch die Lehre von Patentanspruch 11 gelöst.

Weitere vorteilhafte Ausgestaltungen sind in den Unteransprüchen beschrieben.

Ausführungsbeispiele werden im folgenden unter Hinweis auf die beigefügten Zeichnungen näher beschrieben. Es stellen dar:

Fig. 1 Beispiele für das Auftreten des Referenzmusters 0000 0000 1 in einem digitalen Datenstrom;

Fig. 2 ein Ablaufdiagramm für ein erfindungsgemäßes Verfahren zum Auffinden eines Referenzmusters in einem digitalen Datenstrom;

Fig. 3 eine Übersicht, die die Zahl der mit einem Referenzmuster 0000 0000 1 übereinstimmenden vorderen Bits für verschiedene Bitmuster von vorderen Bits anzeigt;

Fig. 4 eine Übersicht, die die Zahl der mit dem Referenzmuster 0000 0000 1 übereinstimmenden hinteren Bits für verschiedene Bitmuster von hinteren Bits anzeigt;

Fig. 5 eine Vergleichstabelle, die die Zahl der mit dem Referenzmuster 0000 0000 1 übereinstimmenden vorderen Bits von acht Bit langen Bitfolgen in der Reihenfolge ihrer Analogwerte anzeigt;

Fig. 6 eine Vergleichstabelle, die die Zahl der mit dem Referenzmuster 0000 0000 1 übereinstimmenden hinteren Bits von acht Bit langen Bitfolgen in der Reihenfolge ihrer Analogwerte anzeigt; und

Fig. 7 ein Beispiel für das Auffinden des Referenzmuster 0000 0000 1 in einem digitalen Datenstrom.

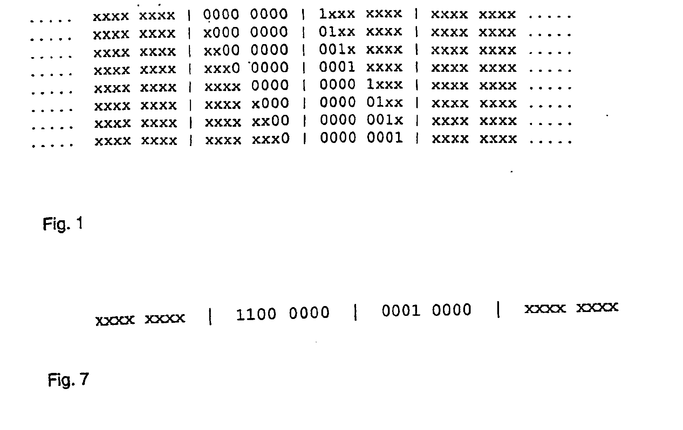

Zunächst soll anhand von Fig. 1 das mögliche Auftreten eines Referenzmusters in einem byteweise ausgerichteten beliebigen, kontinuierlichen Datenstrom illustriert werden. Darin steht "x" für ein beliebiges Bit, also 1 oder 0. Als Beispiel ist das Referenzmuster 0000 0000 1 gewählt, das stets innerhalb von zwei Bytes unterzubringen ist. Fig. 1 zeigt nun unterschiedliche Positionen des Referenzmusters innerhalb von 2 Bytes, jeweils um ein 1 Bit zueinander versetzt, wie sie in der Realität zu finden sind und worin das Referenzmuster gemäß dem erfindungsgemäßen Verfahren gefunden werden soll.

Im nachfolgenden wird davon ausgegangen, dass eine Bitfolge von links nach rechts verläuft, d.h. der Beginn der Bitfolge ist links, das Ende der Bitfolge rechts. Entsprechend werden mit den vorderen Bits einer Bitfolge auf der linken Seite angeordnete Bits, mit den hinteren Bits auf der rechten Seite angeordnete Bits der Bitfolge bezeichnet. Im Sinne dieser Annahme hat das in Fig. 1 gewählte Referenzmuster 0000 00001 am Beginn das Bit 0 und am Ende das Bit 1.

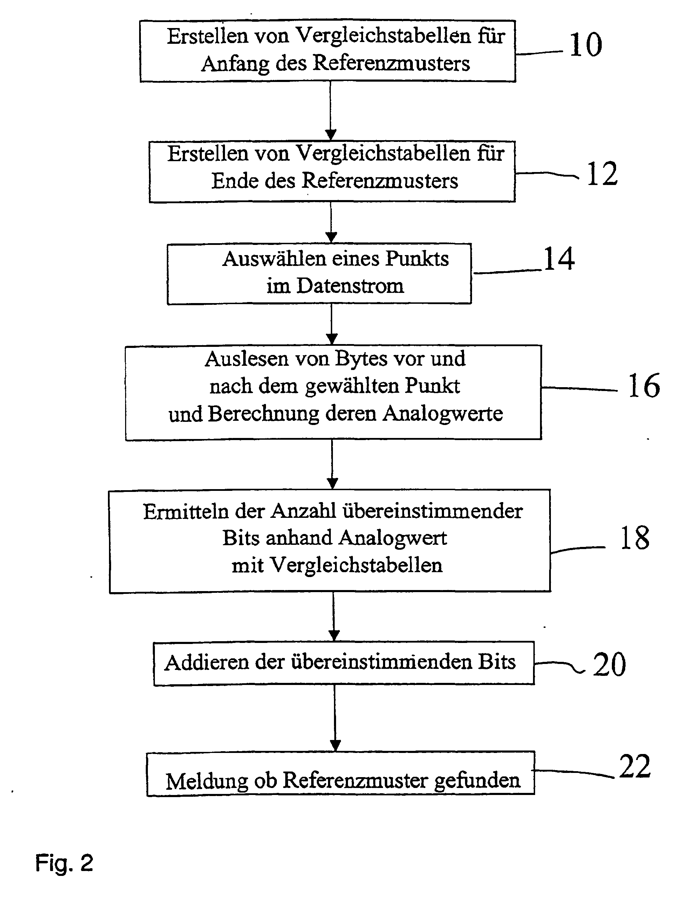

Das erfindungsgemäße Verfahren zum Auffinden eines Referenzmusters in einem seriellen Strom digitaler Daten wird anhand des in Fig. 2 dargestellten Ablaufdiagramms erläutert. Als Beispiel wird das Referenzmuster 0000 00001 gewählt. Im ersten Schritt 10 wird zunächst eine Vergleichstabelle T1 für den Anfang des Referenzmusters erzeugt. Die Einträge dieser Vergleichstabelle T1 sollen jeweils Bitfolgen mit einer Länge von acht Bit, also einem Byte, entsprechen. Dies bietet sich an, da der Datenstrom üblicherweise byteweise ausgelesen wird.

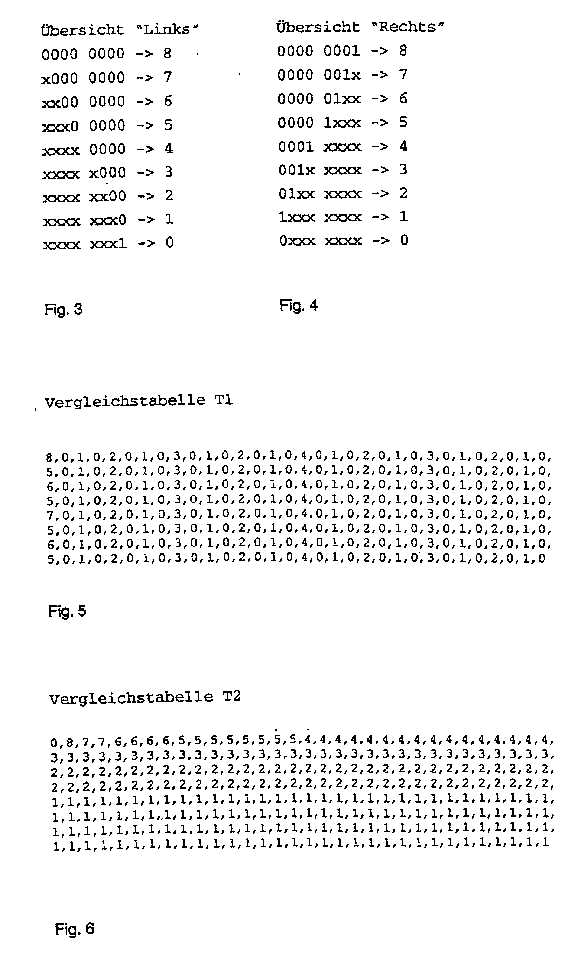

Zur Erzeugung dieser Vergleichstabelle T1 wird für alle $2^8$ = 256 mit 8 Bit möglichen Bitfolgen ermittelt, in wie vielen Bits sich Übereinstimmungen mit vorderen Bits des Referenzmusters ergeben. Dabei gelten nur solche Bits als übereinstimmend, die vom Ende der zu untersuchenden Bitfolge beginnend mit Bitteilfolgen des Referenzmuster übereinstimmen, wobei die Bitteilfolgen des Referenzmuster mit dem Beginn des Referenzmusters beginnen. Dies verdeutlicht die Übersicht "Links" in Fig. 3, bei der die Zahl der mit dem Beginn des Referenzmusters 0000 0000 1 übereinstimmenden Bits für alle möglichen Bitfolgen dargestellt ist. Die Bits, deren Wert unerheblich ist, sind mit "x" bezeichnet. Mit Hilfe dieser Übersicht wird die Vergleichstabelle T1, Fig. 5, erstellt. In der Vergleichstabelle T1 ist es ausreichend, nur die Anzahl der übereinstimmenden Bits abzulegen, wenn der zugehörige Analogwert aus der Reihenfolge der Ablage deutlich wird. Dies soll an folgenden exemplarisch herausgegriffenen Werten verdeutlicht werden. Der erste Wert in der Vergleichstabelle T1, Fig. 5, gehört zum Analogwert 0, dem die Bitfolge 0000 0000 entspricht. Diese weist gemäß der ersten Zeile der Übersicht "Links", Fig. 3, acht übereinstimmende Bits mit dem Beginn des Referenzmusters 0000 0000 1 auf. Folglich ist in der Vergleichstabelle T1 der Wert 8 abgelegt. Der zweite Wert in der Vergleichstabelle T1 gehört zum Analogwert 1, dem die Bitfolge 0000 0001 entspricht. Zu dieser Bitfolge gehört nach der letzten Zeile der Übersicht "Links", Fig. 3, kein mit dem Beginn des Referenzmusters 0000 0000 1 übereinstimmendes Bit. Demgemäss ist in der Vergleichstabelle T1 der Wert 0 eingetragen. An vorletzter Stelle in der Vergleichstabelle T1 ist weiterhin beispielsweise der Wert 1 abzulesen, da zum Analogwert 254 die Bitfolge 1111 1110 gehört, die gemäß der vorletzten Zeile der Übersicht "Links" genau ein mit dem Beginn des Referenzmuster übereinstimmendes Bit aufweist. An letzter Stelle der Vergleichstabelle T1 ist schließlich der Wert 0 abgelegt, da die dem Analogwert 255 entsprechende Bitfolge 1111 1111, wie aus der letzten Zeile der Übersicht "Links", Fig. 3, ersichtlich, kein mit dem Beginn des Referenzmusters übereinstimmendes Bit aufweist.

Im darauf folgenden Schritt 12 wird eine entsprechende Vergleichstabelle T2, Fg. 6, für Übereinstimmungen mit dem Ende des Referenzmusters erstellt. Auch diese Vergleichstabelle T2 soll wiederum Einträge aufweisen, die mit Bitfolgen korrespondieren, die 1 Byte, also acht Bits lang sind. Bei der Erstellung der Vergleichstabelle T2 wird analog wie bei der Erstellung der Vergleichstabelle T1 vorgegangen, wobei nur diejenigen Bits als übereinstimmend gelten, die sich in einer mit dem Ende des Referenzmusters übereinstimmenden Bitteilfolge befinden, wobei sich diese Bitteilfolge in den Einträgen der Vergleichstabelle T2 am Anfang befinden muss. Dies wird aus der Übersicht "Rechts" in Fig. 4 ersichtlich, in der die Anzahl der mit dem Ende des Referenzmusters 0000 0000 1 übereinstimmenden Bits für alle möglichen mit 8 Bit möglichen Bitfolgen dargestellt ist. Mit Hilfe der Übersicht "Rechts" in Fig. 4 wird die Vergleichstabelle T2 erzeugt, die in Fig. 6 abgebildet ist. In ihr sind die Zahlen der mit dem Ende des Referenzmusters übereinstimmenden Bits in der Reihenfolge der Analogwerte abgelegt. An erster Stelle steht beispielsweise eine 0, da zum Analogwert 0, also der Bitfolge 0000 0000, gemäß der letzten Zeile der Übersicht "Rechts", Fig. 4, kein mit dem Ende des Referenzmusters 0000 0000 1 übereinstimmendes Bit gehört.

Nach der einmaligen Erstellung der Vergleichstabellen T1 und T2 in den Schritten 10 und 12 wird im Datenstrom ein Punkt P zwischen zwei Bytes ausgewählt, Schritt 14. Im nächsten Schritt 16 wird das vor dem Punkt P und das nach dem Punkt P liegende Byte ausgelesen und der jeweilige Analogwert berechnet. Mit den Analogwerten kann aus der Vergleichstabelle T1, Fig. 5, für das Byte vor dem Punkt P die Zahl der mit dem Anfang des Referenzmusters übereinstimmenden Bits und aus der Vergleichstabelle T2, Fig. 6, für das Byte nach dem Punkt P die Zahl der mit dem Ende des Referenzmusters übereinstimmenden Bits sehr schnell ermittelt werden, Schritt 18.

Im Schritt 20 wird die Summe aus der Anzahl der übereinstimmenden Bits vor und nach dem Punkt P gebildet. Ist die Summe der übereinstimmenden Bits mindestens so groß, wie die Zahl der Bits im Referenzmuster, wird die Meldung ausgegeben, dass das Referenzmuster in den zwei untersuchten Bytes gefunden wurde, Schritt 22. Aus der Zahl der vor und nach dem Punkt P mit dem Referenzmuster übereinstimmenden Bits, ist auch die Position des Referenzmusters innerhalb der zwei Bytes bekannt.

Wenn das Byte vor dem Punkt P beispielsweise aus der Bitfolge 1100 0000 und das Byte nach dem Punkt P aus der Bitfolge 0001 0000 besteht, Fig. 7, werden die Analogwerte zu 192 und zu 16 berechnet. Aus der Vergleichstabelle T1, Fig. 5, wird zum Analogwert 192, also an der 193. Stelle der Wert von 6 mit dem Anfang des Referenzmusters 0000 0000 1 übereinstimmenden Bits ausgelesen (vgl. hierzu auch die 3. Zeile der Übersicht "Links") und aus der Vergleichstabelle T2, Fig. 6, wird zum Analogwert 16, also an der 17. Stelle der Wert von 4 mit dem Ende des Referenzmusters 0000 0000 1 übereinstimmenden Bits ausgelesen (vgl. hierzu auch die 5. Zeile der Übersicht "Rechts"). Die Summe der übereinstimmenden Bits beträgt also 10 und ist damit größer als die Zahl der Bits im Referenzmuster 0000 0000 1. Es wird folglich die Meldung ausgegeben, dass das Referenzmuster gefunden wurde.

Für den Fall, daß das Referenzmuster nicht gefunden wurde, wird ein Byte weitergegangen, die nächsten zwei Bytes aus dem Datenstrom geladen und dem oben beschriebenen Vergleich mit den Vergleichstabellen unterzogen.

Prinzipiell können in den Vergleichstabellen die Analogwerte zusammen mit der Zahl übereinstimmender Bits auch von längeren Bitfolgen abgelegt werden. Allerdings hat dies den Nachteil, dass die Vergleichstabellen größer werden und dementsprechend mehr Speicherplatz benötigen. Vor allem aber nimmt der Zeitbedarf zum Vergleichen mit großen Vergleichstabellen zu. Zum Auffinden längerer Referenzmuster werden daher Vergleichstabellen mit mehreren Untertabellen erstellt.

Obwohl die Einträge in den einzelnen Untertabellen theoretisch beliebig lang sein können, wird in der folgenden Beschreibung davon ausgegangen, dass die Einträge in den einzelnen Untertabellen jeweils acht Bit lang sind, da, wie erwähnt, der Datenstrom in der Regel byteweise ausgelesen wird. Im nachfolgenden Beispiel wird angenommen, eine erste Vergleichstabelle T1' umfasst 2 Untertabellen UT11 und UT121, eine zweite Vergleichstabelle T2' umfasst ebenfalls 2 Untertabellen, nämlich die Untertabellen UT21 und UT221. Mit Bezug auf den Punkt P ist die Anordnung dieser Tabellen im Hinblick auf die sie durchlaufenden Bitfolgen wie folgt:

$$ UT11 - UT121 - P - UT221 - UT21. $$

Zur Erstellung der ersten Untertabelle UT11 der Vergleichstabelle T1' wird wie bei der Erzeugung der Vergleichstabelle T1 ohne Untertabellen vorgegangen, indem in der ersten Untertabelle UT11 die Anzahl von mit den ersten acht Bits des Referenzmusters übereinstimmenden Bits für alle möglichen Bitfolgen in der Reihenfolge der zugehörigen Analogwerte abgelegt werden, vgl. oben Schritt 10. Dabei werden wiederum Bits als übereinstimmend gewertet, die sich in Bitteilfolgen befinden, die sich im Referenzmuster am Anfang befinden. Die entsprechenden Bitteilfolgen müssen sich in der Untertabelle UT11 am Ende befinden.

In der zweiten Untertabelle UT121 werden die Analogwerte der Bitfolgen abgelegt, die sich für Übereinstimmungen in 8 Bits an die in der Untertabelle UT11 abgelegten Bitfolgen anschließen müssten.

Analog Schritt 12 wird für die Erstellung der ersten Untertabelle UT21 der Vergleichstabelle T2' ausgehend von einer Länge der Einträge von einem Byte, für alle 256 möglichen Bitfolgen die Anzahl der mit den hinteren Bits des Referenzmusters übereinstimmenden Bits in der Reihenfolge der Analogwerte der zugehörigen Bitfolgen abgelegt. Dabei werden Bits als übereinstimmend gewertet, die sich in Bitteilfolgen befinden, die sich im Referenzmuster am Ende und in den 256 Bitfolgen am Anfang befinden. Bei der Erstellung der Untertabetle UT221 werden analog zur Erstellung der Untertabelle UT121 die Analogwerte der Bitfolgen abgelegt, die sich für Übereinstimmungen in 8 Bits an die in der Untertabelle UT21 abgelegten Bitfolgen anschließen müssten.

Nach dem einmaligen Erstellen der Vergleichstabellen wird analog -Schritt 14 zum Auffinden des Referenzmusters ein Punkt P zwischen zwei Bytes-im Referenzmuster ausgewählt und analog Schritt 16 die 2 Bytes, die zeitlich vor dem Punkt P liegen, und 2 Bytes, die zeitlich nach dem Punkt P liegen, ausgefeseh und deren Analogwert berechnet. Mit Hilfe der Analogwerte werden aus den Untertabellen UT11, UT121, UT21 und UT221 die übereinstimmenden Bits ermittelt. Im vorliegenden Fall der Verwendung von Untertabellen ist zunächst zu prüfen, ob die Summe der Übereinstimmungen über der Anzahl der Bit des Referenzmuster liegt. Weiterhin ist jedoch auch zu prüfen, ob sich die Einträge, die zu "Treffern" geführt haben, in den Untertabellen an entsprechenden Positionen befinden, d.h. ein Zusammensetzen der Treffer der einzelnen Untertabellen tatsächlich zu dem gesuchten Referenzmuster führt. Erst wenn auch diese Voraussetzung erfüllt ist, wird eine Meldung ausgegeben, dass das Referenzmuster gefunden wurde, vgl. Schritt 22.

Unabhängig von dem soeben dargestellten Ausführungsbeispiel ist es möglich, Vergleichstabellen in eine Vielzahl weiterer Untertabellen zu unterteilen. So können mit Bezug auf das obige Beispiel in der Vergleichstabelle T1' weitere Untertabellen UT122 bis UT12j, j ≥ 2 zwischen den Untertabellen UT11 und UT121 eingefügt werden. Gleiches gilt für die Vergleichstabelle T2', in der weitere Untertabellen UT212 bis UT21 i, i ≥ 2 zwischen den Untertabellen UT21 und UT211 eingefügt werden könnten. Wie für den Fachmann offensichtlich können Vergleichstabellen mit Untertabellen und Vergleichstabellen ohne Untertabellen bei der Suche nach einem Referenzmuster miteinander kombiniert werden.

Obiges Vorgehen soll nunmehr am Beispiel des Referenzmusters

0000 0000 0000 0000 0000 0000 1

näher erläutert. Dazu ist es sinnvoll, zwei Bytes vor dem gewählten Punkt P und zwei Bytes nach dem gewählten Punkt P zu untersuchen, da das Referenzmuster stets innerhalb von vier Bytes liegt. Die Vergleichstabelle T1' hat dann die zwei Untertabellen, UT11 und UT121. Die Vergleichstabelle T2' hat ebenfalls zwei Untertabellen, UT21 und UT221, wenn wieder davon ausgegangen wird, dass die Einträge in den Untertabellen ein Byte lang sein sollen.

Zur Erstellung der ersten Untertabelle UT11 der Vergleichstabelle T1', Schritt 10, wird für alle 256 Bitfolgen der Analogwert berechnet und zusammen mit der Zahl der am Ende der Bitfolge liegenden Bits, die mit dem Anfang des Referenzmusters übereinstimmen, d. h. im gewählten Beispiel mit der Zahl der am Ende der Bitfolge liegenden Nullen abgelegt. Hierzu kann die Übersicht "Links", Fig. 3, verwendet werden, da die ersten 8 Bits des zuvor gewählten Referenzmusters 0000 0000 1 und des nunmehr gewählten Referenzmusters, siehe oben, identisch sind. Demzufolge sieht die erste Untertabelle UT11 der Vergleichstabelle T1' genauso aus wie die Vergleichstabelle T1, Fig. 5.

Die Erstellung der zweiten Untertabelle UT121 vereinfacht sich im vorliegenden Beispiel: Unabhängig, wie der Beginn des Referenzmusters in der ersten Untertabelle UT11 zu liegen kommt, gibt es in der zweiten Untertabelle UT121 nur eine einzige Bitfolge, die zu 8 "Treffern" führt, nämlich 8 Nullen. Für jede andere Bitfolge ergibt die Untertabelle UT121 0 Treffer. Demnach wird in der Untertabelle UT121 für die Position 0, entsprechend einer Bitfolge von 8 Nullen, der Analogwert 8 abgelegt, entsprechend 8 Treffern. Für alle andere Bitfolgen, die entsprechend ihrer Reihenfolge in der Untertabelle UT121 aufgeführt sein können, lauten die Einträge 0, entsprechend 0 Treffern.

Zur Erstellung der ersten Untertabelle UT21 der Vergleichstabelle T2', die zum Vergleich mit dem Ende des Referenzmusters dient, wird ebenfalls für alle möglichen Bitfolgen der Analogwert berechnet und zusammen mit der Länge der Bitteilfolgen am Anfang der Bitfolgen, die mit dem Ende des Referenzmusters übereinstimmen, abgelegt. Dabei kann genauso vorgegangen werden wie bei der Erstellung der Vergleichstabelle T2, vgl. Fig. 6, für das vorherige Referenzmuster 0000 0000 1. Die Untertabelle UT21 der Vergleichstabelle T2' für das obige Referenzmuster ist daher identisch mit der Vergleichstabelle T2, Fig. 6, für das Referenzmuster 0000 0000 1.

Die Erstellung der zweiten Untertabelle UT221 vereinfacht sich im vorliegenden Beispiel wiederum, vergleiche die obigen Ausführungen zur Erstellung der Untertabelle UT121: Unabhängig davon, wie das Ende des Referenzmusters in der Untertabelle UT21 zu liegen kommt, gibt es in der Untertabelle UT221 nur eine einzige Bitfolge, die zu 8 "Treffern" führt, nämlich 8 Nullen. Für jede andere Bitfolge ergibt die Untertabelle UT221 0 Treffer. Demnach wird in der Untertabelle UT221 für die Position 0, entsprechend einer Bitfolge von 8 Nullen, der Analogwert 8 abgelegt, entsprechend 8 Treffern. Für alle andere Bitfolgen, die entsprechend ihrer Reihenfolge in der Untertabelle UT221 aufgeführt sein können, lauten die Einträge 0, entsprechend 0 Treffern.

Zum Auswerten eines 4 Byte breiten Abschnitts im Datenstrom wird ein Punkt P zwischen zwei Bytes im Datenstrom ausgewählt, Schritt 14, und im Schritt 16 werden zwei Bytes, die zeitlich vor dem Punkt P liegen, und zwei Bytes, die zeitlich nach dem Punkt P liegen, ausgelesen und deren Analogwerte berechnet. Im nächsten Schritt 18 wird mit Hilfe der Analogwerte aus den Vergleichstabellen T1' und T2' die Zahl der mit dem Referenzmuster übereinstimmenden Bits ermittelt. Dabei wird für das zeitlich am Beginn des ausgelesenen Datenstroms liegende Byte die erste Untertabelle UT11 der Vergleichstabelle T1' verwendet, für das diesem Byte folgende Byte die zweite Untertabelle UT121 der Vergleichstabelle T2'. Für das zeitlich direkt nach dem Punkt P liegende Byte ist die zweite Untertabelle UT221 der Vergleichstabelle T2' maßgeblich und für das zweite Byte nach dem Punkt P schließlich die erste Untertabelle UT21 der Vergleichstabelle T2'. Ist die Summe der übereinstimmenden Bits größer oder gleich fünfundzwanzig, Schritt 20, und ist die Zahl der übereinstimmenden Bits des Bytes vor dem Punkt P und des Bytes nach dem Punkt P gleich acht, wird im Schritt 22 die Meldung ausgegeben, dass das Referenzmuster im Datenstrom gefunden worden ist. Aus der Zahl der übereinstimmenden Bits der zeitlich am Beginn und am Ende des ausgelesenen Datenstroms liegenden Bytes lässt sich die genaue Position des Referenzmusters im Datenstrom eindeutig ableiten.

## Patentansprüche

1. Verfahren zur Auffindung eines Referenzmusters in einem seriellen digitalen Datenstrom, wobei das Referenzmuster n Bits lang ist und nur aus Nullen und einer Eins am Anfang oder Ende besteht, oder nur aus Einsen und einer Null am Anfang oder am Ende, folgende Schritte umfassend:

   a) Erzeugen einer ersten Tabelle T1 (Schritt 10) zum Vergleichen von Bits des Datenstroms mit vorderen k Bits des Referenzmusters, wobei $1 < k < n$ und die Einträge in der ersten Tabelle Bitfolgen entsprechen die s1 Bits lang sind;
   b) Erzeugen einer zweiten Tabelle T2 (Schritt 12) zum Vergleichen von Bits des Datenstroms mit hinteren m Bits des Referenzmusters, wobei $1 \leq m \leq n$ und die Einträge der zweiten Tabelle Bitfolgen entsprechen die s2 Bits lang sind;
   c) Definieren eines Punkts P (Schritt 14) zwischen zwei Bits im Datenstrom;
   d) Verwenden von s1 zeitlich vor dem Punkt P gelegenen Bits zum Auslesen von Einträgen in der ersten Vergleichstabelle T1 und Ermitteln der Maximalzahl von Bits einer übereinstimmenden Bitfolge ausgehend vom Punkt P;
   e) Verwenden von s2 zeitlich nach dem Punkt P gelegenen Bits zum Auslesen von Einträgen in der zweiten Vergleichstabelle T2 und Ermitteln der Maximalzahl von Bits einer übereinstimmenden Bitfolge ausgehend vom Punkt P;
   f) Ermitteln der Summe Z (Schritt 20) der in den Schritten d) und e) ermittelten Maximalzahlen;
   g) Erzeugen einer Meldung (Schritt 22), daß das Referenzmuster gefunden wurde, falls die im Schritt f) ermittelte Summe $Z \geq n$ ist.

2. Verfahren nach Anspruch 1,
   **dadurch gekennzeichnet,**
   **dass** mit $b = 1$ oder 2 mindestens eine Tabelle Tb in eine erste Untertabelle UTb1 und j zweite Untertabellen UTb21 bis UTb2j aufgeteilt ist, wobei die Einträge in der Untertabelle UTb1 Bitfolgen entsprechen die sb1 Bits lang sind und die Einträge in den Untertabellen UTb21 bis UTb2j Bitfolgen entsprechen die sb21 bis sb2j Bits lang sind und die Summe $Lb = sb1 + sb21 + ... + sb2j$ gleich sb ist, und wobei die zweite Untertabelle UTb21 beim Vergleichen dem Punkt P zunächst liegt und die anderen zweiten Untertabellen UTb2i ($i = 2$ bis j) und zuletzt die erste Untertabelle UTb1 sich an die Untertabelle UTb21 in der vom Punkt P wegführenden Richtung anschließen,

wobei im entsprechenden Verwendungsschritt d) und/oder e) die Maximalzahlen der Übereinstimmungen der Einträge der Untertabellen UTb1, UTb21, ..., UTb2j ermittelt werden, und die Meldung von Schritt g) nur dann erzeugt wird, wenn

- die Maximalzahl von Übereinstimmungen der Untertabellen UTb21 bis UTb2j gleich der Länge der entsprechenden Einträge sb21 bis sb2j ist, und
- die Summe Z der übereinstimmenden Bits ≥ n ist.

**3.** Verfahren nach Anspruch 2,
**dadurch gekennzeichnet,**
**dass** die Meldung von Schritt g) nur dann erzeugt wird, wenn weiterhin festgestellt, wird, dass die einzelnen die Übereinstimmung ergebenden Einträge der Untertabellen zusammengesetzt das Referenzmuster ergeben und/oder enthalten.

**4.** Verfahren nach einem der Ansprüche 1 bis 3,
**dadurch gekennzeichnet,**
**dass** in den Tabellen und, sofern auf Anspruch 2 oder 3 rückbezogen, auch in den Untertabellen alle Kombinationen, die mit den den jeweiligen Einträgen zugeordneten Bitlängen möglich sind, zusammen mit der Zahl der Bits, die in der jeweiligen Kombination mit dem Referenzmuster übereinstimmen, abgelegt werden, oder lediglich die Zahl der Bits, die in der jeweiligen Kombination mit dem Referenzmuster übereinstimmen, alleine in einer vorbestimmten Anordnung abgelegt wird.

**5.** Verfahren nach Anspruch 4,
**dadurch gekennzeichnet,**
**dass** die Kombinationen jeweils als analoger Zahlenwert abgelegt sind und bei dem Vergleich der Schritte d) und e) die zu vergleichende Bitfolge des Datenstroms in einen Analogwert umgewandelt wird (Schritt 16).

**6.** Verfahren nach einem der vorhergehenden Ansprüche,
**dadurch gekennzeichnet,**
**dass** nur eine feste Anzahl x von Bits aus dem Datenstrom der Verwendung der Schritte d) und e) zuführbar ist, wobei s1 und s2 gleich einem ganzzahligen Vielfachen von x sind, wobei insbesondere s1 gleich s2 ist.

**7.** Verfahren nach Anspruch 6,
**dadurch gekennzeichnet,**
**dass** die Anzahl x zehn oder ein ganzzahliges Vielfaches von acht beträgt.

**8.** Verfahren nach einem der Ansprüche 6 oder 7,

**dadurch gekennzeichnet,**
**dass** die Anzahl der Bits des Referenzmusters ein ganzzahliges Vielfaches der Anzahl x plus 1 ist.

**9.** Verfahren nach einem der vorhergehenden Ansprüche,
**dadurch gekennzeichnet,**
**dass** s1 gleich s2 gleich n ist.

**10.** Verfahren nach einem der vorhergehenden Ansprüche,
**dadurch gekennzeichnet,**
**dass** die Tabellen und, sofern auf Anspruch 2 rückbezogen, auch die Untertabellen zeitunkritisch vorab erstellt werden.

**11.** Vorrichtung zur Auffindung eines Referenzmusters in einem seriellen digitalen Datenstrom, wobei das Referenzmuster n Bits lang ist **und nur aus Nullen und einer Eins am Anfang oder Ende besteht, oder nur aus Einsen und einer Null am Anfang oder am Ende**, umfassend:

- eine Vorrichtung zum Erzeugen einer ersten Tabelle T1 zum Vergleichen von Bits des Datenstroms mit vorderen k Bits des Referenzmusters,

wobei $1 \leq k \leq n$ und die Einträge in der ersten Tabelle Bitfolgen entsprechen die s1 Bits lang sind;

- eine Vorrichtung zum Erzeugen einer zweiten Tabelle T2 zum Vergleichen von Bits des Datenstroms mit hinteren m Bits des Referenzmusters, wobei $1 \leq m \leq n$ und die Einträge der zweiten Tabelle Bitfolgen entsprechen die s2 Bits lang sind;
- eine Vorrichtung zum Definieren eines Punkts P zwischen zwei Bits im Datenstrom;
- eine Vorrichtung zum Verwenden von s1 zeitlich vor dem Punkt P gelegenen Bits zum Auslesen von Einträgen in der ersten Vergleichstabelle T1 und Ermitteln der Maximalzahl von Bits einer übereinstimmenden Bitfolge ausgehend vom Punkt P;
- eine Vorrichtung zum Verwenden von s2 zeitlich nach dem Punkt P gelegenen Bits zum Auslesen von Einträgen in der zweiten Vergleichstabelle T2 und Ermitteln der Maximalzahl von Bits einer übereinstimmenden Bitfolge ausgehend vom Punkt P;
- eine Vorrichtung zum Ermitteln der Summe Z der von den Verwendungs vorrichtungen ermittelten Maximalzahlen;
- eine Vorrichtung zum Erzeugen einer Meldung, daß das Referenzmuster gefunden wurde, falls die im Schritt f) ermittelte Summe Z ≥ n ist.

12. Vorrichtung nach Anspruch 11,
**dadurch gekennzeichnet,**
**dass** sie derart ausgelegt ist, dass immer nur eine feste Anzahl von Bits den Verwendungsvorrichtungen zuführbar ist, insbesondere ganzzahlige Vielfache eines Bytes.

## Claims

1. Method for detecting a reference pattern in a serial digital data stream, wherein the reference pattern is n bits long and is only composed of zeroes and a one at the beginning or at the end, or only of ones and a zero at the beginning or at the end, including the following steps:

   a) creating a first table T1 (step 10) for comparing bits of the data stream with front k bits of the reference pattern, wherein $1 \leq k \leq n$, and the entries in the first table correspond to bit sequences, which are s1 bits long;
   b) creating a second table T2 (step 12) for comparing bits of the data stream with rear m bits of the reference pattern, wherein $1 \leq m \leq n$, and the entries of the second table correspond to bit sequences, which are s2 bits long;
   c) defining a point P (step 14) between two bits in the data stream;
   d) using s1 bits located in front of the point P in time, for reading-out entries in the first comparison table T1, and determining the maximum number of bits of a matching bit sequence starting from point P;
   e) using s2 bits located after the point P in time, for reading-out entries in the second comparison table T2, and determining the maximum number of bits of a matching bit sequence starting from point P;
   f) determining the sum Z (step 20) of the maximum numbers determined in steps d) and e);
   g) generating a message (step 22) that the reference pattern has been detected, if the sum Z $\geq n$ determined in step f).

2. Method according to claim 1,
**characterized in that**
with b = 1 or 2, at least one table Tb is divided in a first sub-table UTb1 and j second sub-tables UTb21 to UTb2j, wherein the entries in the sub-table UTb1 correspond to bit sequences, which are sb1 bits long, and the entries in the sub-tables UTb21 to UTb2j correspond to bit sequences, which are sb21 to sb2j bits long, and the sum Lb = sb1 + sb21 + ... + sb2j is equal to sb, and
wherein in comparison, the second sub-table UTb21 is closest to the point P, and the other second sub-tables UTb2i (I = 2 to j) and finally the first sub-table UTb1 follow the sub-table UTb21 in the direction away from the point P, wherein in the corresponding using step d) and/or e), the maximum numbers of the matches of the entries of the sub-tables UTb1, UTb21, ..., UTb2j are determined, and the message of step g) is only generated, if

   - the maximum number of matches of the sub-tables UTb21 to UTb2j is equal to the length of the corresponding entries sb21 to sb2j, and
   - the sum Z of the matching bits is $\geq$ n.

3. Method according to claim 2,
**characterized in that**
the message of step g) is generated only, if it is further determined that the individual entries of the sub-tables resulting in the match, collectively result in the reference pattern and/or contain it.

4. Method according to any one of claims 1 to 3,
**characterized in that**
in the tables and, if with reference to claim 2 or 3, also in the sub-tables, all of the combinations possible with the bit lengths associated with the respective entries are stored together with the number of bits matching the reference pattern in the respective combination, or only the number of bits matching the reference pattern in the respective combination, are stored alone in a predetermined arrangement.

5. Method according to claim 4,
**characterized in that**
the combinations are each stored as an analog numerical value, and in the comparison of steps d) and e) the bit sequence of the data stream to be compared is converted into an analog value (step 16).

6. Method according to any one of the preceding claims,
**characterized in that**
only a fixed number x of bits from the data stream is able to be supplied to the use of steps d) and e), wherein s1 and s2 are equal to an integer multiple of x, wherein especially s1 is equal to s2.

7. Method according to claim 6,
**characterized in that**
the number x is ten or an integer multiple of eight.

8. Method according to any one of claims 6 or 7,
**characterized in that**
the number of bits of the reference pattern is an integer multiple of the number x plus 1.

9. Method according to any one of the preceding claims,
**characterized in that**
s1 is equal to s2 equal to n.

**10.** Method according to any one of the preceding claims,
**characterized in that**
the tables and, if with reference to claim 2, also the sub-tables are pre-created uncritical in time.

**11.** Apparatus for detecting a reference pattern in a serial digital data stream, wherein the reference pattern is n bits long and is only composed of zeroes and a one at the beginning or at the end, or only of ones and a zero at the beginning or at the end, including:

- a device for creating a first table T1 for comparing bits of the data stream with front k bits of the reference pattern, wherein $1 \leq k \leq n$, and the entries in the first table correspond to bit sequences, which are s1 bits long;
- a device for creating a second table T2 for comparing bits of the data stream with rear m bits of the reference pattern, wherein $1 \leq m \leq n$, and the entries in the second table correspond to bit sequences, which are s2 bits long;
- a device for defining a point P between two bits in the data stream;
- a device for using s1 bits located in front of the point P in time, for reading-out entries in the first comparison table T1, and determining the maximum number of bits of a matching bit sequence starting from point P;
- a device for using s2 bits located after the point P in time, for reading-out entries in the second comparison table T2, and determining the maximum number of bits of a matching bit sequence starting from point P;
- a device for determining the sum Z of the maximum numbers determined by the using devices;
- a device for generating a message that the reference pattern has been detected, if the sum $Z \geq n$ determined in step f).

**12.** Apparatus according to claim 11,
**characterized in that**
it is configured such that always only a fixed number of bits is able to be supplied to the using devices, especially integer multiples of a byte.

**Revendications**

**1.** Méthode de détection d'un motif de référence dans un flux numérique de données série, le motif de référence ayant une longueur de n bits et ne se constituant que de zéros et d'un un en début ou en fin ou seulement de uns et d'un zéro en début ou fin, comprenant les étapes suivantes :

a) création d'un premier tableau T1 (étape 10) pour la comparaison de bits du flux de données aux k premiers bits du motif de référence, où $1 \leq k \leq n$ et les enregistrements dans le premier tableau correspondent à des suites de bits longues de s1 bits ;
b) création d'un deuxième tableau T2 (étape 12) pour la comparaison de bits du flux de données aux m derniers bits du motif de référence, où $1 \leq m \leq n$ et les enregistrements du deuxième tableau correspondent à des suites de bits longues de s2 bits ;
c) définition d'un point P (étape 14) entre deux bits du flux de données ;
d) utilisation de s1 bits situés dans le temps avant le point P pour la lecture d'enregistrements du premier tableau de comparaison T1 et détermination du nombre maximal de bits d'une suite concordante de bits en partant du point P ;
e) utilisation de s2 bits situés dans le temps après le point P pour la lecture d'enregistrements du deuxième tableau de comparaison T2 et détermination du nombre maximal de bits d'une suite concordante de bits en partant du point P ;
f) détermination de la somme Z (étape 20) des nombres maximaux déterminés aux étapes d) et e) ;
g) génération d'un message (étape 22) indiquant que le motif de référence a été détecté si, à l'étape f), la somme déterminée $Z \geq n$.

**2.** Méthode selon la revendication 1,
**caractérisée en ce que**
avec b = 1 ou 2, au-moins un tableau Tb est subdivisé en un premier sous-tableau UTb1 et j deuxièmes tableaux UTb21 à UTb2j, où les enregistrements du sous-tableau UTb1 correspondent à des suites de bits longues de sb1 bits et les enregistrements des sous-tableau UTb21 à UTb2j correspondent à des suites de bits longues de sb21 à sb2j bits et la somme Lb = sb1 + sb21 + ... +sb2j est égale à sb et où le deuxième sous-tableau UTb21, à la comparaison, est le plus proche du point P et les autres deuxièmes sous-tableau UTb2i (i = 2 à j) et enfin le premier sous-tableau UTb1 se raccordent au tableau UTb21 dans la direction opposée au point P, où, dans l'étape d'utilisation correspondante d) et/ou e) les nombres maximaux de concordances des enregistrements des sous-tableaux UTb1, UTb21, ..., UTb2j sont déterminés et le message de l'étape g) n'est généré que si

- le nombre maximal de concordances des sous-tableaux UTb21 à UTb2j est égal à la longueur des enregistrements correspondants sb21 à sb2j et
- la somme Z des bits concordants est $\geq n$.

**3.** Méthode selon la revendication 2, **caractérisée en ce que** le message de l'étape g) n'est généré que s'il est en outre constaté que les différents enregistrements des sous-tableaux qui produisent la concordance, assemblés, produisent et/ou contiennent le motif de référence.

**4.** Méthode selon l'une quelconque des revendications 1 à 3, **caractérisée en ce que** dans les tableaux et, si rapporté à la revendication 2 ou 3, également dans les sous-tableaux, sont déposées toutes les combinaisons qui, avec les longueurs en bits affectées aux enregistrements correspondants, sont possibles, ensemble avec le nombre de bits qui, dans la combinaison du moment, concordent avec le motif de référence, ou uniquement le nombre de bits qui, dans la combinaison du moment, concordent avec le motif de référence est seul déposé en une disposition prédéfinie.

**5.** Méthode selon la revendication 4, **caractérisée en ce que** les combinaisons sont chaque fois déposées en tant que valeur numérique analogique et que lors de la comparaison des étapes d) et e), la suite de bits à comparer du flux de données est transformée en une valeur analogique (étape 16).

**6.** Méthode selon l'une quelconque des revendications précédentes, **caractérisée en ce que** seule une quantité fixe x de bits du flux de données peut être fournie aux étapes d) et e), s1 et s2 étant égaux à un multiple entier de x, s1 étant en particulier égal à s2.

**7.** Méthode selon la revendication 6, **caractérisée en ce que** la quantité x est dix ou un multiple entier de huit.

**8.** Méthode selon l'une quelconque des revendications 6 ou 7, **caractérisée en ce que** la quantité de bits du motif de référence est un multiple entier de la quantité x plus 1.

**9.** Méthode selon l'une quelconque des revendications précédentes, **caractérisée en ce que** s1 est égal à s2 qui est égal à n.

**10.** Méthode selon l'une quelconque des revendications précédentes, **caractérisée en ce que** les tableaux et, si rapporté à la revendication 2, également les sous-tableaux, sont créés à l'avance sans que le temps soit critique.

**11.** Dispositif de détection d'un motif de référence dans un flux numérique de données série, le motif de référence ayant une longueur de n bits et ne se constituant que de zéros et d'un un en début ou en fin ou seulement de uns et d'un zéro en début ou fin, comprenant :

- un dispositif pour créer un premier tableau T1 pour la comparaison de bits du flux de données aux k premiers bits du motif de référence, où $1 \leq k \leq n$ et les enregistrements dans le premier tableau correspondent à des suites de bits longues de s1 bits ;
- un dispositif pour créer un deuxième tableau T2 pour la comparaison de bits du flux de données aux m derniers bits du motif de référence, où $1 \leq m \leq n$ et les enregistrements du deuxième tableau correspondent à des suites de bits longues de s2 bits ;
- un dispositif pour définir un point P entre deux bits du flux de données ;
- un dispositif pour utiliser s1 bits situés dans le temps avant le point P pour la lecture d'enregistrements du premier tableau de comparaison T1 et déterminer le nombre maximal de bits d'une suite concordante de bits en partant du point P ;
- un dispositif pour utiliser s2 bits situés dans le temps après le point P pour la lecture d'enregistrements du deuxième tableau de comparaison T2 et déterminer le nombre maximal de bits d'une suite concordante de bits en partant du point P ;
- un dispositif pour déterminer la somme Z des nombres maximaux déterminés par les dispositifs d'utilisation ;
- un dispositif pour générer un message indiquant que le motif de référence a été détecté si, à l'étape f), la somme déterminée $Z \geq n$.

**12.** Dispositif selon la revendication 11 **caractérisé en ce que** il est constitué de manière telle que seule une quantité fixe de bits peut être fournie aux dispositifs d'utilisation, en particulier un multiple entier d'un octet.

```
. . . . .  xxxx xxxx | 0000 0000 | 1xxx xxxx | xxxx xxxx . . . . .
. . . . .  xxxx xxxx | x000 0000 | 01xx xxxx | xxxx xxxx . . . . .
. . . . .  xxxx xxxx | xx00 0000 | 001x xxxx | xxxx xxxx . . . . .
. . . . .  xxxx xxxx | xxx0 0000 | 0001 xxxx | xxxx xxxx . . . . .
. . . . .  xxxx xxxx | xxxx 0000 | 0000 1xxx | xxxx xxxx . . . . .
. . . . .  xxxx xxxx | xxxx x000 | 0000 01xx | xxxx xxxx . . . . .
. . . . .  xxxx xxxx | xxxx xx00 | 0000 001x | xxxx xxxx . . . . .
. . . . .  xxxx xxxx | xxxx xxx0 | 0000 0001 | xxxx xxxx . . . . .
```

Fig. 1

```
xxxx xxxx  |  1100 0000  |  0001 0000  |  xxxx xxxx
```

Fig. 7

```
┌─────────────────────────────────┐
│   Erstellen von Vergleichstabellen für  │────── 10
│     Anfang des Referenzmusters          │
└─────────────────────────────────┘
                 │
                 ▼
┌─────────────────────────────────┐
│   Erstellen von Vergleichstabellen für  │────── 12
│      Ende des Referenzmusters           │
└─────────────────────────────────┘
                 │
                 ▼
┌─────────────────────────────────┐
│      Auswählen eines Punkts             │────── 14
│        im Datenstrom                    │
└─────────────────────────────────┘
                 │
                 ▼
┌─────────────────────────────────┐
│      Auslesen von Bytes vor und         │
│      nach dem gewählten Punkt           │────── 16
│   und Berechnung deren Analogwerte      │
└─────────────────────────────────┘
                 │
                 ▼
┌─────────────────────────────────┐
│  Ermitteln der Anzahl übereinstimmender │
│       Bits anhand Analogwert            │────── 18
│        mit Vergleichstabellen           │
└─────────────────────────────────┘
                 │
                 ▼
┌─────────────────────────────────┐
│  Addieren der übereinstimmenden Bits    │────── 20
└─────────────────────────────────┘
                 │
                 ▼
┌─────────────────────────────────┐
│  Meldung ob Referenzmuster gefunden     │────── 22
└─────────────────────────────────┘
```

Fig. 2

Übersicht "Links"          Übersicht "Rechts"

0000 0000 -> 8  ·          0000 0001 -> 8

x000 0000 -> 7      ·      0000 001x -> 7

xx00 0000 -> 6             0000 01xx -> 6

xxx0 0000 -> 5             0000 1xxx -> 5

xxxx 0000 -> 4             0001 xxxx -> 4

xxxx x000 -> 3             001x xxxx -> 3

xxxx xx00 -> 2             01xx xxxx -> 2

xxxx xxx0 -> 1             1xxx xxxx -> 1

xxxx xxx1 -> 0             0xxx xxxx -> 0


**Fig. 3**                  **Fig. 4**


Vergleichstabelle T1


8,0,1,0,2,0,1,0,3,0,1,0,2,0,1,0,4,0,1,0,2,0,1,0,3,0,1,0,2,0,1,0,
5,0,1,0,2,0,1,0,3,0,1,0,2,0,1,0,4,0,1,0,2,0,1,0,3,0,1,0,2,0,1,0,
6,0,1,0,2,0,1,0,3,0,1,0,2,0,1,0,4,0,1,0,2,0,1,0,3,0,1,0,2,0,1,0,
5,0,1,0,2,0,1,0,3,0,1,0,2,0,1,0,4,0,1,0,2,0,1,0,3,0,1,0,2,0,1,0,
7,0,1,0,2,0,1,0,3,0,1,0,2,0,1,0,4,0,1,0,2,0,1,0,3,0,1,0,2,0,1,0,
5,0,1,0,2,0,1,0,3,0,1,0,2,0,1,0,4,0,1,0,2,0,1,0,3,0,1,0,2,0,1,0,
6,0,1,0,2,0,1,0,3,0,1,0,2,0,1,0,4,0,1,0,2,0,1,0,3,0,1,0,2,0,1,0,
5,0,1,0,2,0,1,0,3,0,1,0,2,0,1,0,4,0,1,0,2,0,1,0,3,0,1,0,2,0,1,0


**Fig. 5**


Vergleichstabelle T2


0,8,7,7,6,6,6,6,5,5,5,5,5,5,5,5,4,4,4,4,4,4,4,4,4,4,4,4,4,4,4,4,
3,3,3,3,3,3,3,3,3,3,3,3,3,3,3,3,3,3,3,3,3,3,3,3,3,3,3,3,3,3,3,3,
2,2,2,2,2,2,2,2,2,2,2,2,2,2,2,2,2,2,2,2,2,2,2,2,2,2,2,2,2,2,2,2,
2,2,2,2,2,2,2,2,2,2,2,2,2,2,2,2,2,2,2,2,2,2,2,2,2,2,2,2,2,2,2,2,
1,1,1,1,1,1,1,1,1,1,1,1,1,1,1,1,1,1,1,1,1,1,1,1,1,1,1,1,1,1,1,1,
1,1,1,1,1,1,1,1,1,1,1,1,1,1,1,1,1,1,1,1,1,1,1,1,1,1,1,1,1,1,1,1,
1,1,1,1,1,1,1,1,1,1,1,1,1,1,1,1,1,1,1,1,1,1,1,1,1,1,1,1,1,1,1,1,
1,1,1,1,1,1,1,1,1,1,1,1,1,1,1,1,1,1,1,1,1,1,1,1,1,1,1,1,1,1,1,1


**Fig. 6**